# EUROPÄISCHE PATENTSCHRIFT

(11) **EP 2 767 764 B1**
(45) Veröffentlichungstag und Bekanntmachung des Hinweises auf die Patenterteilung: **01.12.2021**
(21) Anmeldenummer: 14154860.2
(22) Anmeldetag: 12.02.2014
(51) Int. Cl.: F24C 15/20, F24C 15/16, F24C 7/06, F24C 15/00, A47J 37/06

(54) **GARGERÄT**
COOKING DEVICE
APPAREIL DE CUISSON

(30) Priorität: 15.02.2013 DE 102013002645
(43) Veröffentlichungstag der Anmeldung: 20.08.2014
(73) Patentinhaber: Gronbach Forschungs- und Entwicklungs GmbH & Co. KG, 6342 Niederndorf (AT)
(72) Erfinder: Bocks, Stefan, 83112 Frasdorf (DE); Kofler, Robert, 6334 Schwoich (AT); Weweck, Alexander, 83134 Prutting (DE); Thaller, Stephan, 83564 Soyen (DE); Kopfensteiner, Peter, 6341 Ebbs (AT)
(74) Vertreter: Hofstetter, Schurack & Partner

(56) Entgegenhaltungen:
- WO-A1-2012/150579
- JP-A- 2000 230 719
- JP-A- 2008 167 957
- US-A1- 2008 099 461
- US-A1- 2010 200 563

## Beschreibung

Die Erfindung betrifft ein Gargerät mit einem Gehäuse, in dem eine Schublade längsverschieblich geführt ist, vorzugsweise in horizontaler Richtung. In der Schublade ist ein Gargutträger anbringbar oder angebracht, vorzugsweise in horizontaler Richtung. Das Gargerät, insbesondere dessen Gehäuse, ist insbesondere geeignet zum Einbau in ein Gerät, insbesondere in ein Elektrogerät und/oder in eine Einbauküche. Das Gargerät kann allerdings auch als gesondertes Gerät hergestellt werden.

Ein Gargerät ähnlicher Art ist aus der DE 10 2011 101 042 A1 bekannt.

Aus der DE 203 16 141 U1 ist eine Wärmelade bekannt, die ein Gehäuse aufweist, in dem eine Schublade verschieblich geführt ist, die eine beheizbare Platte aufweist.

Die DE 102 03 606 A1 offenbart einen Lichtwellenofen zur Erwärmung von Gargut in einem Garraum mit einem Ofengehäuse und einer Schublade.

Die CH 535 921 A offenbart einen Wärmeapparat mit einem Fettfilter und einem Aktivkohlefilter.

Aus der DE 10 2004 051 284 B3 ist ein Garofen mit einem Fettfilter bekannt.

Des Weiteren offenbart die WO 2012/150579 A1 einen eingebauten Grill. Des Weiteren ist der US 2010/200563 A1 ein Gargerät mit einer Schublade als bekannt zu entnehmen. Außerdem ist aus der JP 2008 167957 A ein Grillgerät bekannt. Darüber hinaus offenbart die JP 2000 230719 A einen Gasgrill.

Aufgabe der Erfindung ist es, ein verbessertes Gargerät der eingangs angegebenen Art vorzuschlagen.

Erfindungsgemäß wird diese Aufgabe durch ein Gargerät mit den Merkmalen des Anspruchs 1 gelöst. In dem Gehäuse sind ein Lüfter und ein Fettfilter angeordnet. Durch den Lüfter wird ein Luftstrom erzeugt. Dieser Luftstrom kann Wrasen abtransportieren, die beim Garen des Garguts entstehen, insbesondere Fett, Rauch und/oder Dampf. Durch den Fettfilter können die Wrasen, insbesondere Fett, Rauch und/oder Dampf, aus dem Luftstrom herausgefiltert werden. Durch den Luftstrom kann als weiterer Vorteil eine Kühlung des Gargeräts, insbesondere des Gehäuses, erreicht werden.

Erfindungsgemäß ist es vorgesehen, dass das Gehäuse im vorderen Bereich seiner Bodenplatte eine oder mehrere Lufteintrittsöffnungen aufweist.

Die Bodenplatte des Gehäuses und die Bodenwand der Schublade verlaufen im Abstand voneinander, wodurch zwischen der Bodenplatte und der Bodenwand ein Lufteinlasskanal gebildet ist, der von der Lufteintrittsöffnung zu dem Fettfilter verläuft.

In dem Gehäuse ist ein Luftauslassblech angeordnet, das im Abstand von der Deckplatte des Gehäuses verläuft. Durch diesen Abstand kann ein Kanal gebildet werden, der als Luftauslasskanal wirken kann.

Der Lüfter ist als Querstromlüfter ausgebildet. Durch diese Ausgestaltung kann er besonders platzsparend eingebaut werden.

Das Gehäuse weist im vorderen Bereich seiner Deckplatte eine oder mehrere Luftaustrittsöffnungen auf.

Vorteilhafte Weiterbildungen sind in den Unteransprüchen beschrieben.

Der Lüfter und der Fettfilter können hinter der beheizbaren oder beheizten Platte angeordnet sein.

Vorteilhaft ist es, wenn der Fettfilter vor dem Lüfter angeordnet ist.

Nach einer weiteren vorteilhaften Weiterbildung ist in dem Gehäuse ein Aktivkohlefilter angeordnet. Der Aktivkohlefilter ist vorzugsweise hinter dem Fettfilter angeordnet. Ferner ist der Aktivkohlefilter vorzugsweise vor dem Lüfter angeordnet. Vorteilhaft ist es, wenn sich der Aktivkohlefilter zwischen dem Fettfilter und dem Lüfter befindet.

Vorteilhaft ist es, wenn die beheizbare oder beheizte Platte in Höhenrichtung bewegbar ist. Die Platte kann in Richtung des Gargutträgers bewegt werden. Sie kann zu dem Gargutträger hin und/oder von diesem weg bewegt werden.

Vorzugsweise ist die Platte parallelverschiebbar.

Die Platte kann synchron mit der Schublade bewegbar sein. Diese synchrone Bewegungsmöglichkeit ist vorzugsweise derart ausgestaltet, dass sich die Platte in Längsrichtung synchron mit der Schublade und dem Gargutträger verschiebt, vorzugsweise in horizontaler Richtung. Gleichzeitig kann sich die Platte in Höhenrichtung bewegen. Es ist möglich, dass sich die Platte nur in einem Teil des Bewegungsbereichs der Schublade synchron mit der Schublade bewegt.

Vorteilhaft ist es, wenn zwischen der Schublade und der Platte eine lösbare Kupplung vorhanden ist. Die lösbare Kupplung kann als Magnetkupplung oder als mechanische Kupplung oder auf andere Weise ausgestaltet sein. Wenn die Kupplungsverbindung hergestellt ist, kann sich die Platte synchron mit der Schublade bewegen. Bei gelöster Kupplung kann sich die Schublade unabhängig von der Platte bewegen. Insbesondere bewegt sich die Platte bei gelöster Kupplung nicht.

Eine weitere vorteilhafte Weiterbildung ist dadurch gekennzeichnet, dass die Platte in dem Gehäuse längsverschieblich und höhenverstellbar geführt ist. Sie kann auf diese Weise in Höhenrichtung gegenüber der Schublade und dem Gargutträger bewegt werden, ohne dass gleichzeitig eine Relativbewegung zwischen der Schublade und dem Gargutträger und der Platte in Längsrichtung, vorzugsweise in horizontaler Richtung, stattfindet.

Nach einer weiteren vorteilhaften Weiterbildung sind in dem Gehäuse Führungskulissen für Führungselemente der Platte vorgesehen. Die Führungskulissen können in den Seitenwangen des Gehäuses vorgesehen sein. Vorzugsweise sind vordere und hintere Führungskulissen vorhanden. Besonders vorteilhaft ist es, wenn in jeder Seitenwange jeweils eine vordere und eine hintere Führungskulisse vorhanden ist, insgesamt also vier Führungskulissen. Die Führungselemente der Platte können als Führungsrollen ausgebildet sein. Vorzugsweise ist für jede Führungskulisse eine Führungsrolle vorhanden.

Nach einer weiteren vorteilhaften Weiterbildung ist in dem Gehäuse eine Begrenzungseinrichtung zur Begrenzung der Höhenbewegung der Platte vorgesehen. Die Begrenzungseinrichtung kann als eine oder mehrere Begrenzungsschienen ausgebildet sein. Vorteilhaft ist es, wenn auf beiden Seiten des Gehäuses jeweils eine Begrenzungsschiene vorhanden ist. Die Begrenzungsschienen verlaufen vorzugsweise horizontal. Vorteilhaft ist es, wenn die Begrenzungseinrichtung, insbesondere die Begrenzungsschiene oder die Begrenzungsschienen, mit den Führungselementen, insbesondere den Führungsrollen der Platte zusammenwirken. Die Begrenzungseinrichtung, insbesondere die Begrenzungsschiene oder die Begrenzungsschienen sind vorzugsweise neben den Führungskulissen angeordnet.

Vorteilhaft ist es, wenn die Begrenzungseinrichtung, insbesondere die Begrenzungsschiene oder die Begrenzungsschienen, höhenverstellbar sind. Besonders vorteilhaft ist es, wenn die Begrenzungseinrichtung, insbesondere die Begrenzungsschiene oder die Begrenzungsschienen, außer Eingriff bringbar sind. Durch die Begrenzungseinrichtung kann erreicht werden, dass die Platte nur bis zu einer bestimmten Höhe über dem Gargutträger absenkbar ist. Diese Höhe kann derart gewählt sein, dass zwischen den oberen Endflächen des Gargutes, das auf dem Gargutträger liegt, und der unteren Endfläche der Platte ein bestimmter Abstand gewährleistet bleibt. Wenn die Begrenzungseinrichtung höhenverstellbar ist, kann diese Höhenverstellbarkeit in der Weise ausgestaltet werden, dass die Begrenzungseinrichtung außer Eingriff bringbar ist. In diesem Fall kann die Platte so weit abgesenkt werden, dass sie auf dem Gargut, das auf dem Gargutträger liegt, aufliegt. Das Gargut ist dann von beiden Seiten zwischen dem Gargutträger und der Platte eingeklemmt.

Vorteilhaft ist es, wenn die Platte in einem Plattengehäuse lösbar befestigbar ist. Sie kann dann auf einfache Weise demontiert werden, insbesondere zu Reinigungszwecken, und wieder eingesetzt werden.

Die Erfindung kann mit besonderem Vorteil bei dem Gargerät eingesetzt werden, das in der prioritätsälteren, nicht vorveröffentlichten Deutschen Patentanmeldung 10 2012 003 970.0 oder in der Europäischen Patentanmeldung, die unter Inanspruchnahme dieser Deutschen Patentanmeldung eingereicht worden ist, beschrieben ist. Sie kann allerdings auch bei einem Gargerät nach der DE 10 2011 101 042 A1 oder bei einem Gargerät nach der prioritätsälteren, nicht vorveröffentlichten Deutschen Patentanmeldung 10 2012 025 412.1 oder bei weiteren Gargeräten angewendet werden.

Ein Ausführungsbeispiel der Erfindung wird nachstehend anhand der beigefügten Zeichnung im einzelnen erläutert. In der Zeichnung zeigt
- Fig. 1: ein Gargerät mit herausgezogener Schublade in einer perspektivischen Darstellung,
- Fig. 2: das Gargerät gemäß Fig. 1 mit herausgezogener Schublade in einer Seitenansicht,
- Fig. 3: das Gargerät gemäß Fig. 1 und 2 mit teilweise eingeschobener Schublade in einer Seitenansicht ohne die dem Betrachter zugewandte, rechte Seitenplatte,
- Fig. 4: das Gargerät gemäß Fig. 1 bis 3 mit vollständig eingeschobener Schublade in einer Seitenansicht ohne die dem Betrachter zugewandte, rechte Seitenplatte,
- Fig. 5: das Gargerät gemäß Fig. 1 bis 4 mit vollständig eingeschobener Schublade und einer nach oben verstellten Begrenzungseinrichtung in einer Seitenansicht ohne die dem Betrachter zugewandte, rechte Seitenplatte,
- Fig. 6: das Gargerät gemäß Fig. 1 bis 5 in einer der Fig. 2 entsprechenden Schnittansicht mit herausgezogener Schublade ohne die dem Betrachter zugewandte, rechte Seitenwange,
- Fig. 7: das Gargerät gemäß Fig. 1 bis 6 in einer der Fig. 3 entsprechenden Schnittansicht mit teilweise eingeschobener Schublade ohne die dem Betrachter zugewandte, rechte Seitenwange,
- Fig. 8: das Gargerät gemäß Fig. 1 bis 7 in einer der Fig. 4 entsprechenden Schnittansicht mit vollständig eingeschobener Schublade ohne die dem Betrachter zugewandte, rechte Seitenwange,
- Fig. 9: das Gargerät gemäß Fig. 1 bis 8 in einer den Fig. 5 und 8 entsprechenden Schnittansicht mit vollständig eingeschobener Schublade und mit einer nach oben verstellten Begrenzungseinrichtung,
- Fig. 10: einen vergrößerten Ausschnitt aus der Fig. 3 ,
- Fig. 11: einen vergrößerten Ausschnitt aus der Fig. 4 ,
- Fig. 12: eine Ausführungsform eines erfindungsgemäßen Gargeräts mit vollständig eingeschobener Schublade in einer perspektivischen Ansicht,
- Fig. 13: das Gargerät gemäß Fig. 12 in einer Seitenansicht,
- Fig. 14: das Gargerät gemäß Fig. 12 und 13 in einer weiteren Seitenansicht,
- Fig. 15: das Gargerät gemäß Fig. 12 bis 14 in einer Seitenansicht mit vollständig geöffneter Schublade und
- Fig. 16: eine weitere Seitenansicht des Gargeräts gemäß Fig. 12 bis 15 .

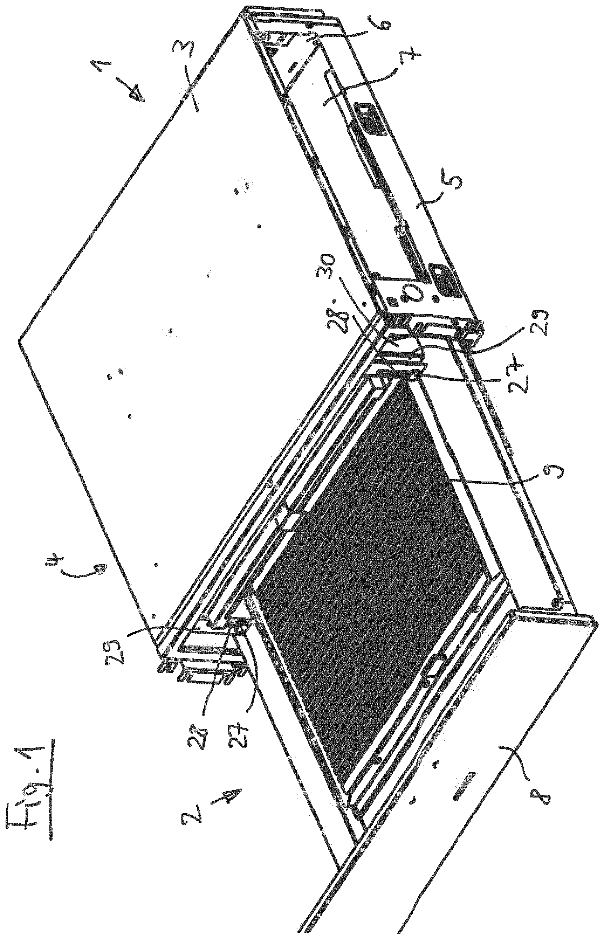

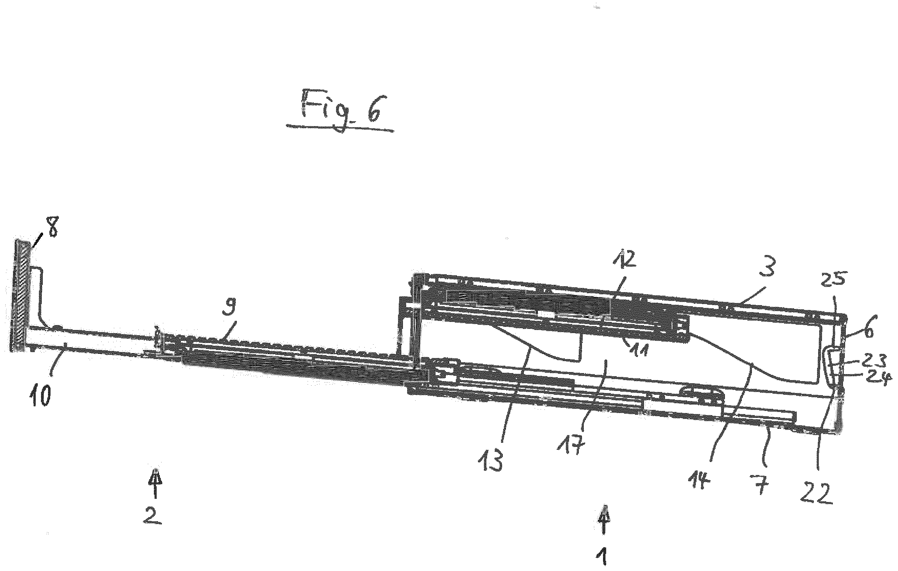

Das in den Fig. 1 bis 11 dargestellte Gargerät entspricht dem Gargerät, das in der prioritätsälteren, nicht vorveröffentlichten Deutschen Patentanmeldung 10 2012 003 970.0 und der zugehörigen Europäischen Patentanmeldung beschrieben ist. Dieses Gargerät soll durch die Erfindung verbessert werden.

Das in Fig. 1 bis 11 dargestellte Gargerät umfasst ein Gehäuse 1, in dem eine Schublade 2 längsverschieblich geführt ist. Das Gehäuse 1 umfasst eine Deckplatte 3, eine linke Seitenplatte 4, eine rechte Seitenplatte 5, eine Rückwand 6 und eine Bodenplatte 7.

Die Schublade 2 umfasst eine Front 8, einen Gargutträger 9, der als Auflageplatte mit quer verlaufenden Vertiefungen ausgebildet ist, und eine Bodenwand 10. Der Gargutträger 9 ist herausnehmbar. Er kann insbesondere zu Reinigungszwecken herausgenommen und wieder eingesetzt werden.

In dem Gehäuse 1 ist oberhalb des Gargutträgers 9 eine beheizbare oder beheizte Platte 11 angeordnet. Die beheizbare Platte 11 ist als Platte mit quer verlaufenden Vertiefungen ausgestaltet. Die Platte 11 ist in einem Plattengehäuse 12 lösbar befestigbar. Sie kann aus dem Plattengehäuse 12 herausgenommen werden, insbesondere zu Reinigungszwecken, und wieder in das Plattengehäuse 12 eingesetzt werden. Es ist allerdings auch möglich, dass das Plattengehäuse 12 lösbar befestigbar ist und dass das Plattengehäuse 12 mit der Platte 11 herausnehmbar ist, insbesondere zu Reinigungszwecken. In diesem Fall kann die Platte 11 fest oder lösbar in dem Plattengehäuse 12 befestigt sein.

In dem Gehäuse sind Führungskulissen 13, 14, 15, 16 vorgesehen. Die linken Führungskulissen 13, 14 befinden sich in einer linken Seitenwange 17 des Gehäuses 1. Die rechten Führungskulissen 15, 16 befinden sich in einer rechten Seitenwange 18 des Gehäuses 1. Die Seitenwangen 17, 18 verlaufen in vertikaler Richtung und parallel zu und im Abstand von den Seitenplatten 4, 5 des Gehäuses 1, jeweils innerhalb des Gehäuses 1. Die Führungskulissen 13, 14, 15, 16 werden von den oberen Endkanten der Seitenwangen 17, 18 gebildet. Sie verlaufen in der Richtung von vorne nach hinten von oben nach unten. An die entsprechenden schrägen Abschnitte der Führungskulissen 13, 14, 15, 16 schließen sich an deren hinteren Enden jeweils kurze horizontale Abschnitte an.

An der Platte 11 oder an deren Gehäuse 12 sind Führungselemente vorgesehen, die als Führungsrollen 19 ausgestaltet sind. Es sind vier Führungsrollen 19 vorhanden, von denen jeweils eine mit der vorderen linken Führungskulisse 13, der hinteren linken Führungskulisse 14, der vorderen rechten Führungskulisse 15 und der hinteren rechten Führungskulisse 16 zusammenwirkt. Die Führungsrollen 19 liegen auf der jeweiligen Führungskulisse 13-16 auf und rollen auf dieser ab. Dementsprechend sind die Führungsrollen 19 seitlich an der Platte 11 oder dem Plattengehäuse 12 drehbar gelagert. Durch die Führungselemente 19 und die Führungskulissen 13-16 ist die Platte 11 in dem Gehäuse 1 längsverschieblich und höhenverstellbar geführt.

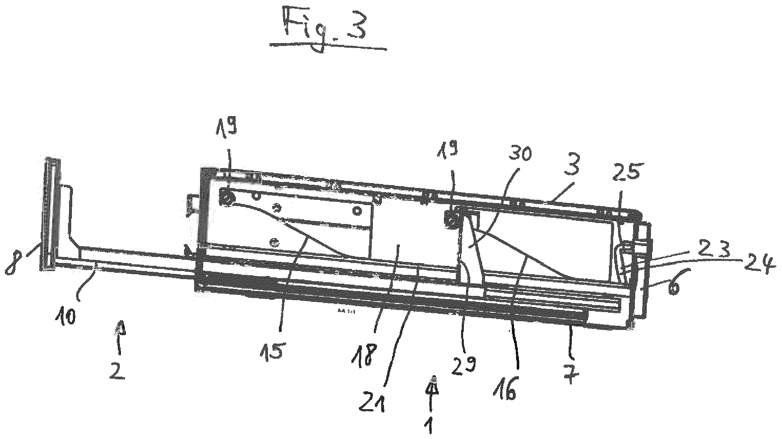

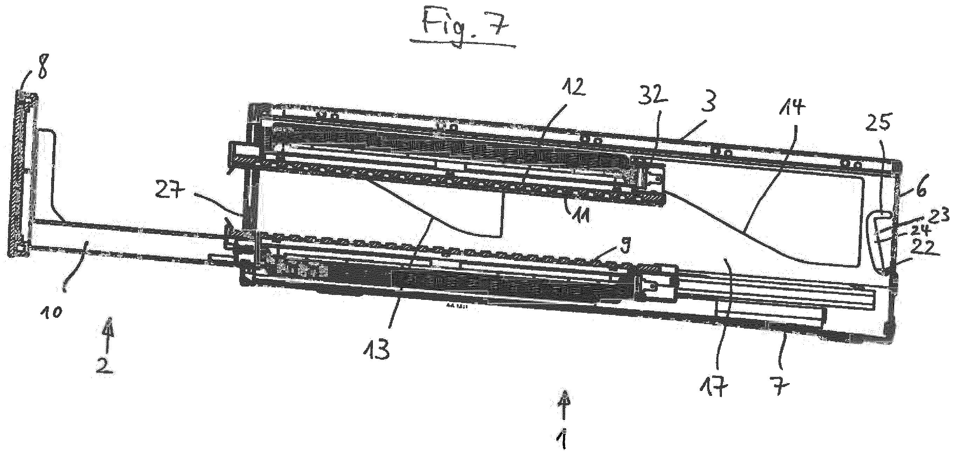

Im Betrieb befindet sich die Schublade 2 zunächst im herausgezogenen Zustand, der in Fig. 1 , 2 und 6 gezeigt ist. In diesem Zustand kann das Gargut auf den Gargutträger 9 aufgelegt werden. Anschließend wird die Schublade 2 in das Gehäuse 1 eingeschoben. In der in Fig. 3 und 7 gezeigten Zwischenstellung ist die Schublade 2 so weit in das Gehäuse 1 eingeschoben, dass sich der Gargutträger 9 und die Platte 11 genau übereinander befinden. In dieser Stellung wird eine lösbare Kupplung zwischen der Schublade 2 und der Platte 11 eingekuppelt. Durch diese Kupplung wird die Platte 11 bei der folgenden weiteren Einschubbewegung der Schublade 2 synchron mit der Schublade 2 bewegt. Die Kupplung wirkt in beide Richtungen. Wenn also die Einschubgeschwindigkeit der Schublade 2 erhöht wird, folgt die Platte 11 synchron mit dieser Bewegung in derselben Weise wie dann, wenn die Einschubbewegung der Schublade 2 verlangsamt werden sollte. Die Kupplung ist also in der Lage, Kräfte in horizontaler Richtung sowohl nach hinten wie auch nach vorne von der Schublade 2 auf die Platte 11 zu übertragen.

Beim weiteren Einschieben der Schublade 2 folgen die Rollen 19 der Platte 11 oder des Plattengehäuses 12 der schräg nach hinten absinkenden Formgestaltung der Führungskulissen 13-16, so dass die Platte 11 zu der weiterhin auf gleicher Höhe bewegten Schublade 2 und dessen Gargutträger 9 hin nach unten bewegt wird. Diese Bewegung in Höhenrichtung ist nicht mit einer Relativbewegung in Längsrichtung verbunden, da die Platte 11 synchron mit der Schublade 2 bewegt wird.

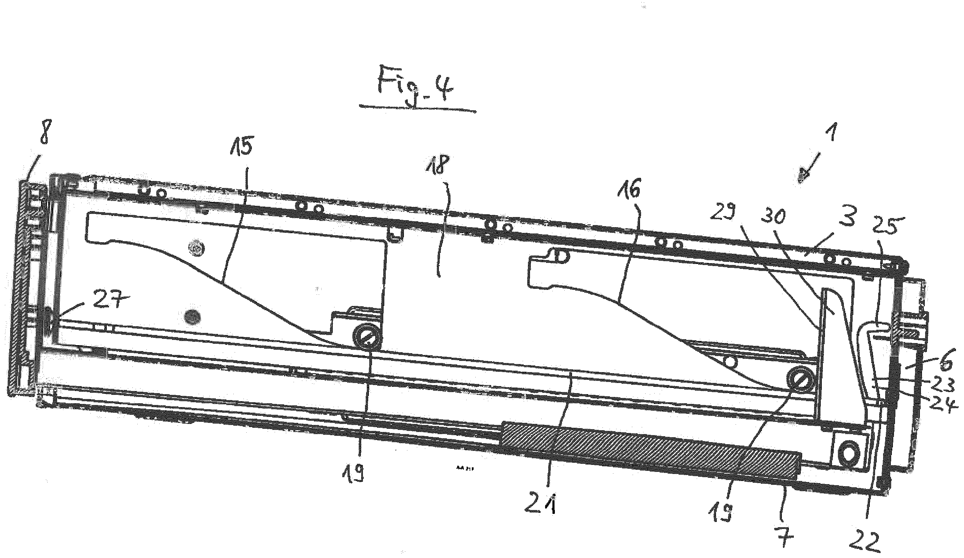

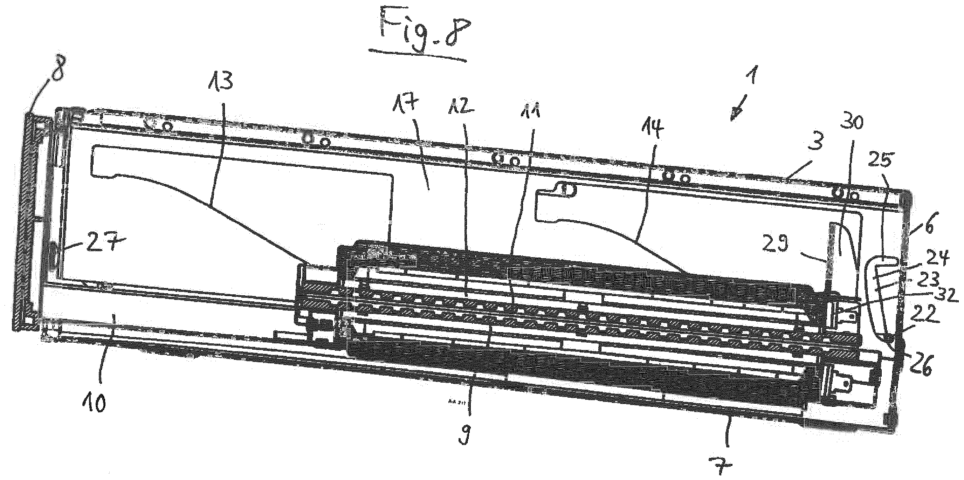

Fig. 4 und 8 zeigen die Endstellung, in der die Schublade 2 vollständig in das Gehäuse 1 eingeschoben ist. In dieser Stellung liegt die Front 8 der Schublade 2 an der Vorderseite des Gehäuses 1 an. Ferner liegt die Platte 11 lagerichtig auf dem Gargutträger 9 auf. In der Darstellung der Fig. 4 und 8 liegt auf dem Gargutträger 9 kein Gargut auf. Unabhängig von der Dicke eines dort aufliegenden Gargutes würde die Platte 11 auf den oberen Endflächen des Gargutes aufliegen. Das Gargut wäre also zwischen dem Gargutträger 9 und der Platte 11 eingeklemmt.

In dem Gehäuse 1 ist eine Begrenzungseinrichtung vorhanden, die zwei Begrenzungsschienen 20, 21 umfasst. Die Begrenzungsschienen 20, 21 haben vorzugsweise einen kreisförmigen Querschnitt, sie können allerdings auch eine andere Querschnittsform aufweisen. Sie verlaufen in horizontaler Richtung parallel zu und im Abstand von den Seitenplatten 4, 5 und den Seitenwangen 17, 18 des Gehäuses 1. Die linke Begrenzungsschiene 20 befindet sich zwischen der linken Seitenwange 17 und der linken Seitenplatte 4 in der Nähe der linken Seitenwange 17. Die rechte Begrenzungsschiene 21 befindet sich zwischen der rechten Seitenwange 18 und der rechten Seitenplatte 5 in der Nähe der rechten Seitenwange 18. Die Rollen 19 weisen eine derartige Länge auf, dass sie nicht nur auf der jeweiligen Führungskulisse 13-16 aufliegen, sondern diese Führungskulissen 13-16 auch noch nach außen so weit überragen, dass sie mit den Begrenzungsschienen 20, 21 in Eingriff gelangen können.

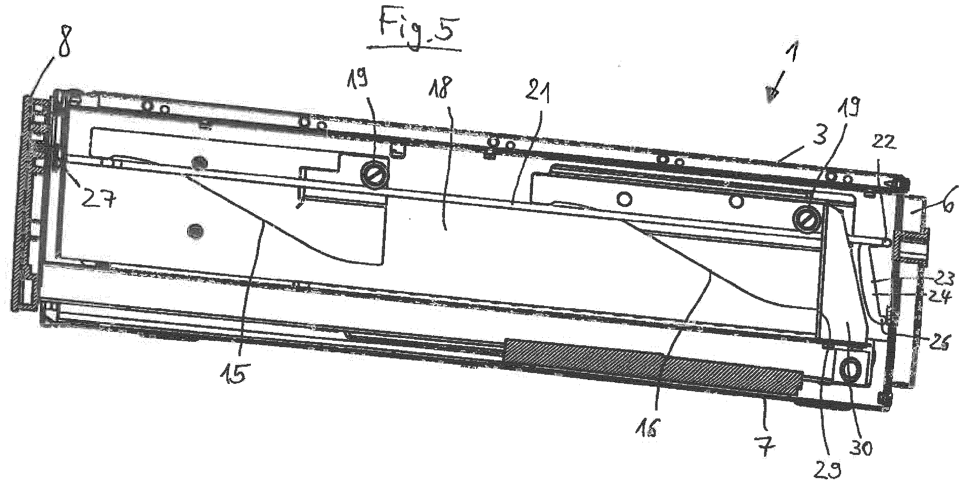

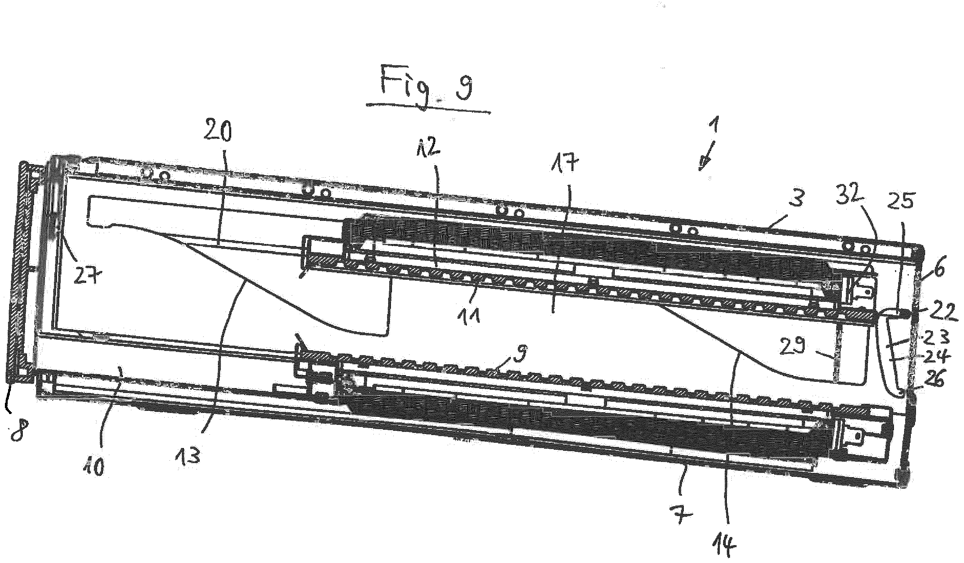

Wie aus Fig. 5 und 9 ersichtlich befinden sich die Begrenzungsschienen 20, 21 in einer Höhe knapp unter der größten Höhe der Führungskulissen 13-16. Wenn die Schublade 2 und mit ihr die Platte 11 in das Gehäuse 1 eingeschoben werden, gelangen die Rollen 19 nach einer kurzen Bewegung längs der Führungskulissen 13-16 mit den Begrenzungsschienen 20, 21 in Eingriff. Sie liegen auf den Begrenzungsschienen 20, 21 auf und heben bei der weiteren Einschubbewegung der Schublade 2 von den Führungskulissen 13-16 ab. Beim weiteren Einschieben der Schublade 2 laufen die Rollen 19 auf den Begrenzungsschienen 20, 21, bis die in Fig. 5 und 9 gezeigte, vollständig eingeschobene Endstellung erreicht ist. In dieser Einstellung besteht nach wie vor ein vertikaler Abstand zwischen dem Gargutträger 9 und der Platte 11. Ein derartiger vertikaler Abstand besteht auch zwischen den oberen Endflächen des Gargutes (in der Zeichnung nicht dargestellt) und der unteren Begrenzungsfläche der Platte 11. Die Platte 11 wirkt auf diese Weise nicht als Kontaktplatte, sondern als Strahlungsplatte.

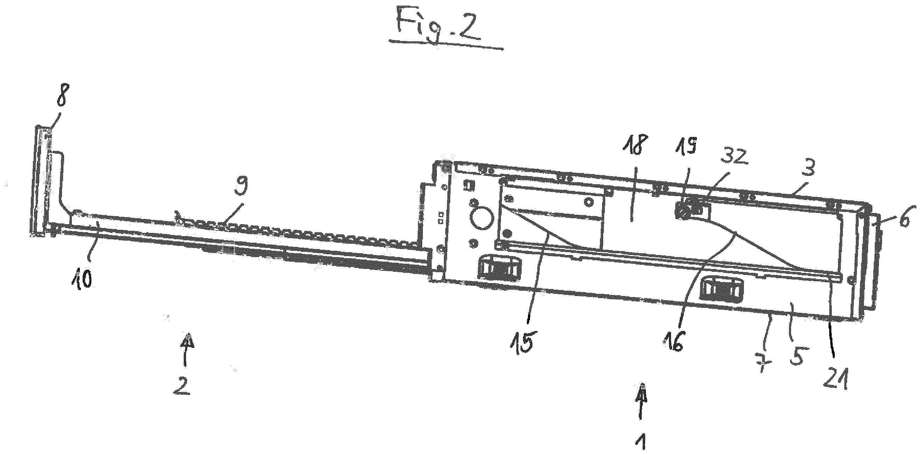

Die hinteren Enden der Begrenzungsschienen 20, 21 weisen nach innen weisende Abkröpfungen 22 auf, die in Aussparungen 23 in den Seitenwangen 17, 18 aufliegen. Die Aussparungen 23 umfassen einen vertikalen Abschnitt 24, einen oberen horizontalen Abschnitt 25 und einen unteren horizontalen Abschnitt 26. Wenn die Begrenzungsschienen 20, 21 in die in Fig. 5 und 9 gezeigte, obere Stellung gebracht werden sollen, werden die Abkröpfungen 22 zu den hinteren Enden der oberen horizontalen Abschnitte 25 der Aussparungen 23 bewegt, wie in Fig. 5 und 9 gezeigt. Wenn die Begrenzungsschienen 20, 21 außer Eingriff gebracht werden sollen, werden die Abkröpfungen 22 durch den oberen horizontalen Abschnitt 25 und dem vertikalen Abschnitt 24 der Abkröpfungen 23 zu dem unteren horizontalen Abschnitt 26 und dort in dessen hinteres Ende bewegt, wie in Fig. 2-4 und 6-8 gezeigt. In dieser unteren Stellung liegen die Begrenzungsschienen 20, 21 unterhalb der Führungskulissen 13-16, so dass die Rollen 19 diese Führungskulissen 13-16 in ihrer vollen Länge durchlaufen und nicht mit den Begrenzungsschienen 20, 21 in Eingriff gelangen.

Die Begrenzungsschienen 20, 21 weisen an ihren vorderen Enden Knöpfe 27 auf, die im Durchmesser größer sind als der Durchmesser der Begrenzungsschienen 20, 21. Die vorderen Enden der Begrenzungsschienen 20, 21 sind in vertikal verlaufenden Führungsschlitzen 28 gelagert, die in mit dem Gehäuse 1 verbundenen Blechen vorgesehen sind. Zum Verstellen der Begrenzungsschienen 20, 21 können die Knöpfe 27 ergriffen und verschoben werden. In den Führungsschlitzen 28 sind Rastvertiefungen vorgesehen (in der Zeichnung nicht dargestellt).

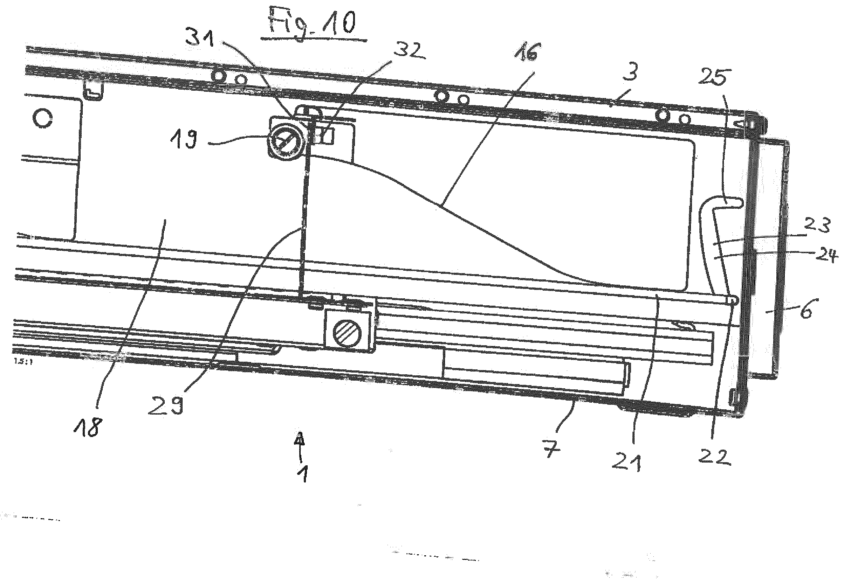

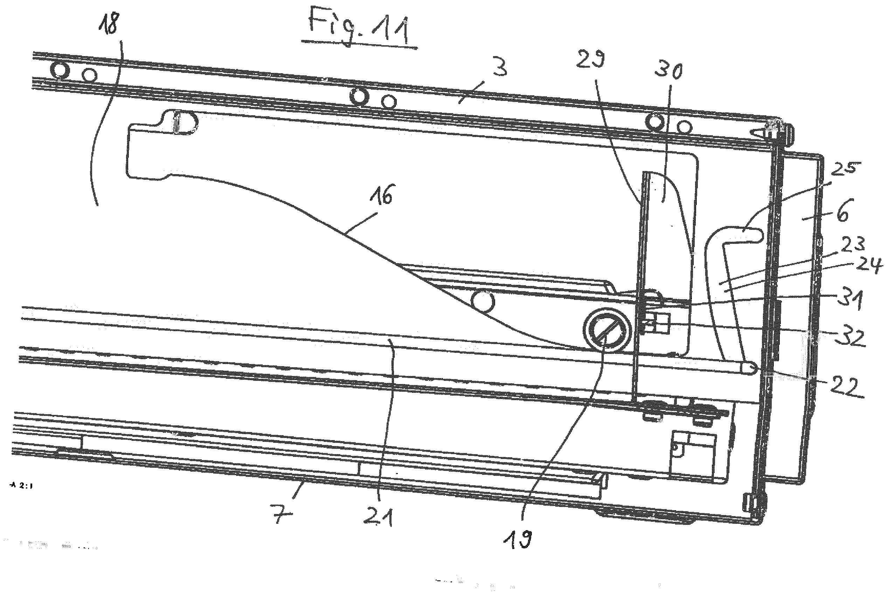

Fig. 10 und 11 zeigen die lösbare Kupplung zwischen der Schublade 2 und der Platte 11, die als Magnetkupplung ausgebildet ist. An der Schublade 2 sind ein linker und ein rechter Anschlag 29 vorgesehen. Die Anschläge 29 sind plattenförmig ausgebildet. Sie verlaufen vertikal nach oben und in einer Richtung quer zur Einschubrichtung der Schublade 2. Die Anschläge 29 sind an ihren äußeren Enden mit Stützflanken 30 versehen, die in vertikaler Richtung nach oben und in Längsrichtung der Schublade, also in deren Einschubrichtung verlaufen.

Mit dem Plattengehäuse 12 sind nach außen weisende Ausleger 31 verbunden, an denen jeweils ein Magnet 32 befestigt ist. Der Magnet 32 kann ein Elektromagnet oder ein Permanentmagnet sein.

Wenn die Schublade 2 teilweise in das Gehäuse 1 eingeschoben ist, wie in Fig. 3 und 10 gezeigt, schlägt der mit der Schublade 2 verbundene Anschlag 29 an den mit der Platte 11 verbundenen Magneten 32 an. Der Anschlag 29 und der Magnet 32 geraten auf diese Weise in Anlage. Sie sind lösbar miteinander verbunden. Während des weiteren Einschubs der Schublade 2 liegt der Anschlag 29 weiterhin an dem Magneten 32 an. Wenn die Bewegung der Schublade 2 verlangsamt wird, bewirkt der Magnet, dass sich die Platte 11 in Einschubrichtung der Schublade 2 nicht von der Schublade 2 lösen kann. Die Bewegungen der Schublade 2 und der Platte 11 bleiben also synchron aneinander gekoppelt.

Die Anschlagfläche des Anschlags 29, an der der Magnet 32 anliegt, ist als vertikale Gleitfläche ausgebildet. Im Verlauf der weiteren Einschubbewegung gleitet der Magnet längs dem Anschlag 29 nach unten, bis er die in Fig. 11 gezeigte Endstellung annimmt.

Das Gargut befindet sich an seiner Unterseite im Kontakt mit dem Gargutträger. Es kann sich mit seiner Oberseite im Kontakt mit der beheizbaren Platte 11 befinden. Allerdings ist es auch möglich, dass die beheizbare Platte 11 oberhalb des Gargutes nicht im Kontakt mit dem Gargut steht und dieses nur von oben mit Wärmestrahlung bestrahlt. Der Gargutträger 9 und/oder die Platte 11 können aus verschiedenen Werkstoffen hergestellt sein, beispielsweise aus Aluminium, vorzugsweise mit einer Antihaftbeschichtung aus beispielsweise Teflon oder Keramik. Der Gargutträger 9 kann ein beheizbarer oder beheizter Gargutträger sein. Die Heizungen für den Gargutträger und/oder die Platte können als Rohrheizkörper ausgebildet sein und elektrisch oder mit Gas beheizt werden. Es kann allerdings auch eine induktive Heizung und/oder ein Strahlungsheizkörper vorgesehen sein, der vorzugsweise elektrisch betrieben wird. Vorteilhaft ist es, wenn eine schnelle Aufheizung gewährleistet ist. Dies kann insbesondere durch eine geringe Masse des Gargutträgers und/oder der Platte erreicht werden. Als Material ist Aluminium besonders geeignet. Vorteilhaft ist es, wenn innerhalb von vier Minuten eine Aufheizung auf 200 °C erreicht werden kann.

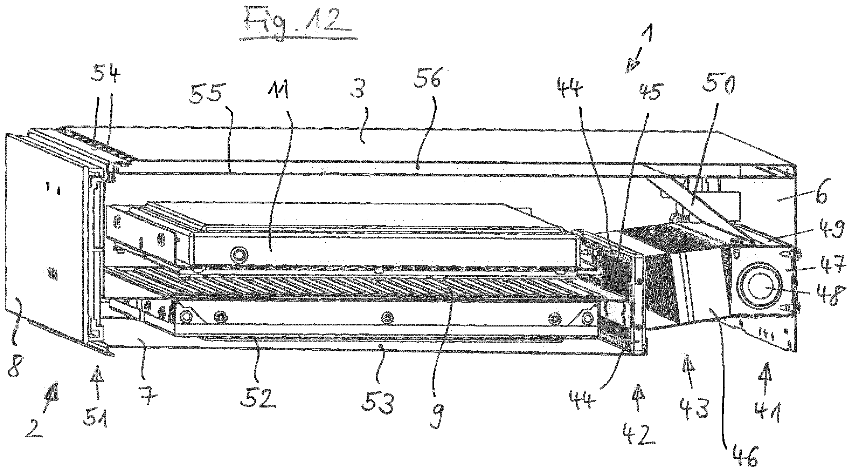

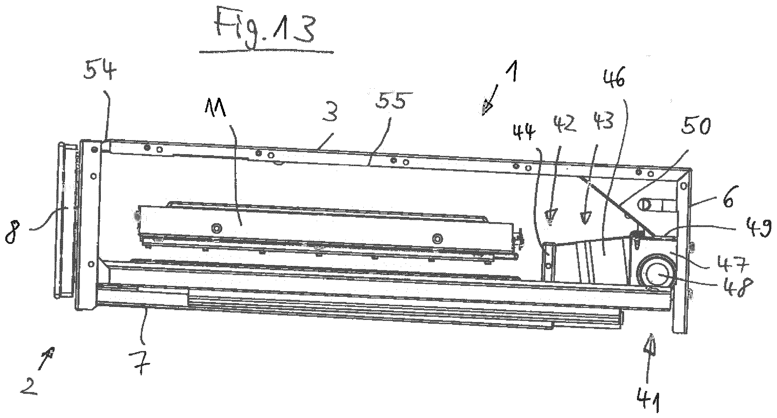

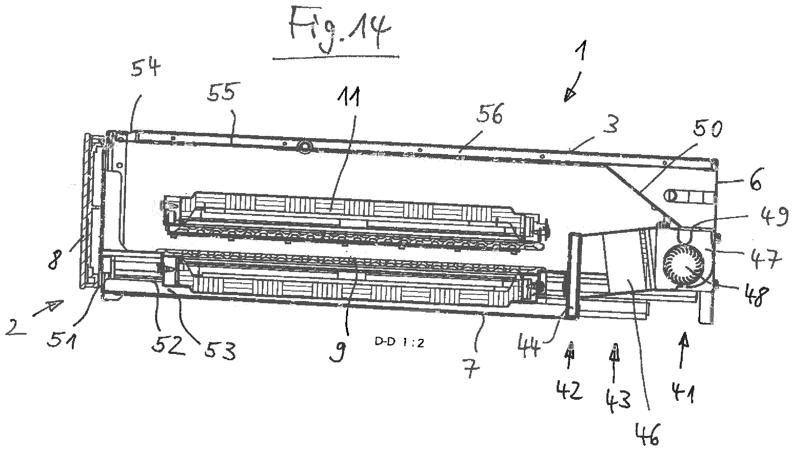

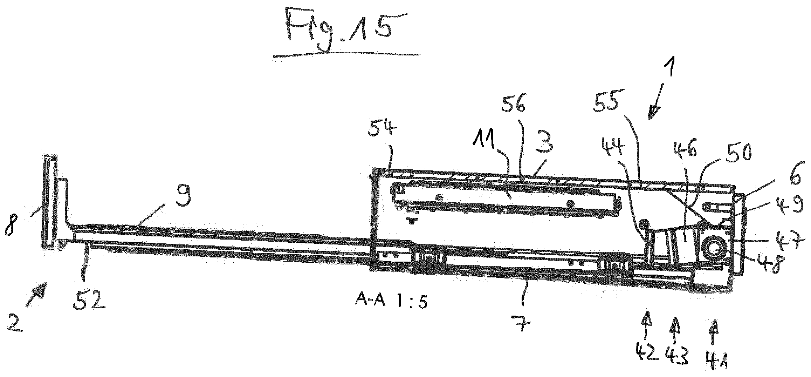

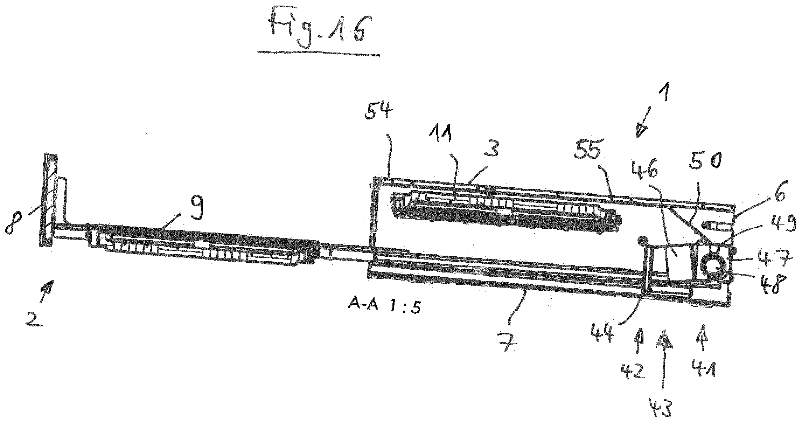

Durch das erfindungsgemäße Gargerät, das in Fig. 12 bis 16 dargestellt ist, wird das Gargerät gemäß Fig. 1 bis 11 verbessert. Im Folgenden werden die Merkmale des erfindungsgemäßen Gargeräts 12 bis 16, die denjenigen der Ausführungsform nach Fig. 1 bis 11 entsprechen, mit denselben Bezugszeichen versehen und nicht erneut beschrieben.

Bei der erfindungsgemäßen Ausführungsform nach Fig. 12 bis 16 sind in dem Gehäuse 1 ein Lüfter 41, ein Fettfilter 42 und ein Aktivkohlefilter 43 angeordnet. Der Lüfter 41, der Fettfilter 42 und der Aktivkohlefilter 43 sind hinter der beheizbaren oder beheizten Platte 11 angeordnet.

Dabei ist der Fettfilter 42 vor dem Lüfter 41 angeordnet. Der Aktivkohlefilter 43 ist hinter dem Fettfilter 42 und vor dem Lüfter 41 angeordnet.

Der Fettfilter 42 umfasst einen Rahmen 44, in dem sich ein Filtereinsatz 45 befindet. Der Rahmen 44 kann aus Metall oder einem anderen geeigneten Werkstoff hergestellt sein. Der Filtereinsatz 45 kann ein Filtergewebe enthalten oder aus einem Filtergewebe bestehen.

Der Aktivkohlefilter 43 umfasst ein Filtergehäuse 46, in dem sich die Aktivkohle befindet.

Der Lüfter 41 ist als Querstromlüfter ausgestaltet. Er umfasst ein Lüftergehäuse 47. Das Lüftergehäuse 47 ist an der Rückwand 6 des Gehäuses 1 befestigt, vorzugsweise angeschraubt. In dem Lüftergehäuse 47 ist eine Lüfterwelle 48 drehbar und antreibbar gelagert. Die Drehachse der Lüfterwelle 48 verläuft in horizontaler Richtung und quer zur Einschubrichtung der Schublade 2.

Der Querstromlüfter 41 ist derart ausgestalten, dass Luft aus der Richtung des Fettfilters 42 und des Aktivkohlefilters 43 angesaugt wird und das diese Luft den Querstromlüfter 41 in Richtung nach oben verlässt. Die Luftaustrittsöffnung des Querstromlüfters 41 ist mit 49 bezeichnet. Sie verläuft über die gesamte Breite des Lüftergehäuses 47.

Über dem Lüfter 41 ist ein Luftleitblech 50 angeordnet. Das Luftleitblech 50 verläuft schräg nach oben, und zwar von hinten unten nach vorne oben ansteigend. Es schließt sich an die Luftaustrittsöffnung 49 an. Durch die Rückwand 6 und das Luftleitblech 50 wird ein Luftleitkanal gebildet, der von der Luftaustrittsöffnung 49 nach oben verläuft.

Das Gehäuse 1 weist im vorderen Bereich seiner Bodenplatte 7 Lufteintrittsöffnungen 51 auf. Die Lufteintrittsöffnungen liegen unterhalb der Front 8 der Schublade 2, wenn sich die Schublade 2 in der geschlossenen Stellung befindet. Ferner liegen die Lufteintrittsöffnugen 51 im Bereich des vorderen Randes der Bodenplatte 7 des Gehäuses 1.

Die Bodenplatte 7 des Gehäuses 1 und die Bodenwand 52 der Schublade 2 verlaufen in einem Abstand voneinander. Auf diese Weise wird zwischen der Bodenplatte 7 und der Bodenwand 52 ein Lufteinlasskanal 53 gebildet, der von den Lufteintrittsöffnungen 51 zu dem Fettfilter 42 verläuft.

Das Gehäuse 1 weist im vorderen Bereich seiner Deckplatte 3 Luftaustrittsöffnungen 54 auf. Die Luftaustrittsöffnungen 54 befinden sich oberhalb der Front 8 der Schublade 2, wenn sich die Schublade 2 in der geschlossenen Stellung befindet. Ferner befinden sich die Luftaustrittsöffnungen 54 im Bereich des vorderen Randes der Deckplatte 3 des Gehäuses 1.

In dem Gehäuse 1 ist ein Luftauslassblech 55 angeordnet, das im Abstand von der Deckplatte 3 des Gehäuses 1 verläuft. Das Luftauslassblech 55 verläuft parallel zu der Deckplatte 3. Durch den Abstand zwischen dem Luftauslassblech 55 und der Deckplatte 3 wird ein Luftauslasskanal 56 gebildet. Der Luftauslasskanal 56 ist zu den Luftaustrittsöffnungen 54 hin geöffnet. An seinem hinteren Ende ist er mit dem oberen Ende des Luftleitkanals verbunden, der von dem Luftleitblech 50 und der Rückwand 6 gebildet wird.

Im Betrieb tritt die von dem Lüfter 41 angesaugte Luft durch die Lufteintrittsöffnungen 51 in den Lufteinlasskanal 53 ein. Sie durchströmt anschließend den Fettfilter 42 und den Aktivkohlefilter 43. Im Fettfilter 42 und im Aktivkohlefilter 43 wird die mit Wrasen beladene Luft gefiltert. Die gereinigte Luft verlässt das Lüftergehäuse 47 durch die Luftaustrittsöffnung 49 nach oben. Sie tritt hinten in den Luftauslasskanal 56 ein, durchströmt den Luftauslasskanal 56 nach vorne und tritt am vorderen Ende des Luftauslasskanals 56 durch die Luftaustrittsöffnungen 54 aus dem Gehäuse 1 aus.

Durch die Erfindung wird es ermöglicht, trotz der beengten Platzverhältnisse eine Durchlüftung des Gargeräts und eine Filterung der mit Wrasen beladenen Luft zu erreichen. Durch die Verwendung eines Querstromlüfters wird eine besonders platzsparende Bauform erreicht. Der durch den Lüfter oder Querstromlüfter erzeugte Luftstrom saugt nicht nur die Wrasen, insbesondere Fett, Rauch und/oder Dampf, ab, sondern sorgt gleichzeitig und zusätzlich für die Kühlung des Gehäuses.

## Patentansprüche

1. Gargerät mit einem Gehäuse (1), in dem eine Schublade (2) längsverschieblich geführt ist, in der ein Gargutträger (9) anbringbar oder angebracht ist, wobei in dem Gehäuse (1) oberhalb des Gargutträgers (9) eine beheizbare oder beheizte Platte (11) angeordnet ist, wobei in dem Gehäuse (1) ein Lüfter (41) und ein Fettfilter (42) angeordnet sind, und wobei
- das Gehäuse (1) im vorderen Bereich seiner Bodenplatte (7) eine oder mehrere Lufteintrittsöffnungen (51) aufweist,
- die Bodenplatte (7) des Gehäuses (1) und die Bodenwand (52) der Schublade (2) im Abstand voneinander verlaufen, wodurch zwischen der Bodenplatte (7) und der Bodenwand (52) ein Lufteinlasskanal (53) gebildet ist, der von der Lufteintrittsöffnung (51) zu dem Fettfilter (42) verläuft,
**dadurch gekennzeichnet, dass**
- in dem Gehäuse (1) ein Luftauslassblech (55) angeordnet ist, das im Abstand von der Deckplatte (3) des Gehäuses (1) verläuft,
- der Lüfter (41) als Querstromlüfter ausgebildet ist, und
- das Gehäuse (1) im vorderen Bereich seiner Deckplatte (3) eine oder mehrere Luftaustrittsöffnungen (54) aufweist.

2. Gargerät nach Anspruch 1,
**dadurch gekennzeichnet, dass**
der Lüfter (41) und der Fettfilter (42) hinter der beheizbaren oder beheizten Platte (11) angeordnet sind.

3. Gargerät nach Anspruch 1 oder 2,
**dadurch gekennzeichnet, dass**
der Fettfilter (42) vor dem Lüfter (41) angeordnet ist.

4. Gargerät nach einem der vorhergehenden Ansprüche,
**dadurch gekennzeichnet, dass**
in dem Gehäuse (1) ein Aktivkohlefilter (43) angeordnet ist.

5. Gargerät nach Anspruch 4,
**dadurch gekennzeichnet, dass**
der Aktivkohlefilter (43) hinter dem Fettfilter (42) angeordnet ist.

6. Gargerät nach einem der vorhergehenden Ansprüche,
**dadurch gekennzeichnet, dass**
die beheizbare oder beheizte Platte (11) in Höhenrichtung bewegbar, vorzugsweise parallelverschiebbar ist.

7. Gargerät nach einem der vorhergehenden Ansprüche,
**dadurch gekennzeichnet, dass**
die Platte (11) synchron mit der Schublade (2) bewegbar ist.

8. Gargerät nach einem der vorhergehenden Ansprüche,
**dadurch gekennzeichnet, dass**
die Platte (11) in dem Gehäuse (1) längsverschieblich und höhenverstellbar geführt ist.

9. Gargerät nach einem der vorhergehenden Ansprüche,
**dadurch gekennzeichnet, dass**
in dem Gehäuse (1) Führungskulissen (13, 14, 15, 16) für Führungselemente (19) der Platte (11) vorgesehen sind.

## Claims

1. A cooking appliance with a housing (1), in which a drawer (2) is longitudinally displaceably guided, in which a support (9) for food to be cooked can be or is attached, wherein a heatable or heated plate (11) is arranged above the support (9) for food to be cooked in the housing (1), wherein a fan (41) and a grease filter (42) are arranged in the housing (1), and wherein
- the housing (1) comprises one or more air inlet openings (51) in the front area of its bottom plate (7),
- the bottom plate (7) of the housing (1) and the bottom wall (52) of the drawer (2) extend at a distance from each other, whereby an air intake channel (53) is formed between the bottom plate (7) and the bottom wall (52), which extends from the air inlet opening (51) to the grease filter (42),
**characterized in that**
- an air outlet sheet (55) is arranged in the housing (1), which extends at a distance from the cover plate (3) of the housing (1),
- the fan (41) is formed as a cross-flow fan, and
- the housing (1) comprises one or more air exit openings (54) in the front area of its cover plate (3).

2. The cooking appliance according to claim 1,
**characterized in that**
the fan (41) and the grease filter (42) are arranged behind the heatable or heated plate (11).

3. The cooking appliance according to claim 1 or 2,
**characterized in that**
the grease filter (42) is arranged in front of the fan (41).

4. The cooking appliance according to any one of the preceding claims,
**characterized in that**
an activated charcoal filter (43) is arranged in the housing (1).

5. The cooking appliance according to claim 4,
**characterized in that**
the activated charcoal filter (43) is arranged behind the grease filter (42).

6. The cooking appliance according to any one of the preceding claims,
**characterized in that**
the heatable or heated plate (11) is movable, preferably translatable, in height direction.

7. The cooking appliance according to any one of the preceding claims,
**characterized in that**
the plate (11) is movable in synchronism with the drawer (2).

8. The cooking appliance according to any one of the preceding claims,
**characterized in that**
the plate (11) is guided longitudinally displaceable and adjustable in height in the housing (1).

9. The cooking appliance according to any one of the preceding claims,
**characterized in that**
guide links (13, 14, 15, 16) for guide elements (19) of the plate (11) are provided in the housing (1).

## Revendications

1. Appareil de cuisson avec un boîtier (1) dans lequel un tiroir est guidé de manière à pouvoir être déplacé longitudinalement, dans lequel un support des aliments à cuire (9) peut être attaché ou est attaché, dans lequel, dans le boîtier (1), au-dessus du support des aliments à cuire (9), une plaque chauffable ou chauffée (11) est agencée, dans lequel, dans le boîtier (1), un ventilateur (41) et un filtre à graisse (42) sont agencés,
et dans lequel
- le boîtier (1) comporte une ou plusieurs ouvertures d'entrée d'air (51) dans la zone avant de sa plaque de base (7),
- la plaque de base (7) du boîtier (1) et la paroi de base (52) du tiroir (2) s'étendent à distance l'une de l'autre, ce qui fait qu'un conduit d'admission d'air (53) est formé entre la plaque de base (7) et la paroi de base (52), le conduit d'admission d'air (53) s'étendant de l'ouverture d'entrée d'air (51) au filtre à graisse (42),
**caractérisé en ce que**
- dans le boîtier (1) une tôle de sortie d'air (55) est agencée qui s'étend à distance de la plaque de recouvrement (3) du boîtier (1),
- le ventilateur (41) est formé en tant que ventilateur à courant transversal, et
- le boîtier (1) comporte une ou plusieurs ouvertures de sortie d'air (54) dans la zone avant de sa plaque de recouvrement (3).

2. Appareil de cuisson selon la revendication 1,
**caractérisé en ce que**
le ventilateur (41) et le filtre à graisse (42) sont agencés derrière la plaque chauffable ou chauffée (11).

3. Appareil de cuisson selon la revendication 1 ou 2,
**caractérisé en ce que**
le filtre à graisse (42) est agencé devant le ventilateur (41).

4. Appareil de cuisson selon l'une quelconque des revendications précédentes,
**caractérisé en ce que**
un filtre à charbon actif (43) est agencé dans le boîtier (1).

5. Appareil de cuisson selon la revendication 4,
**caractérisé en ce que**
le filtre à charbon actif (43) est agencé derrière le filtre à graisse (42).

6. Appareil de cuisson selon l'une quelconque des revendications précédentes,
**caractérisé en ce que**
la plaque chauffable ou chauffée (11) est déplaçable dans la direction de la hauteur, de préférence, est déplaçable en translation parallèle.

7. Appareil de cuisson selon l'une quelconque des revendications précédentes,
**caractérisé en ce que**
la plaque (11) peut être déplacée de manière synchrone avec le tiroir (2).

8. Appareil de cuisson selon l'une quelconque des revendications précédentes
**caractérisé en ce que**
la plaque (11) est guidée dans le boîtier (1) de manière à pouvoir être déplacée longitudinalement et réglable en hauteur.

9. Appareil de cuisson selon l'une quelconque des revendications précédentes,
**caractérisé en ce que**
dans le boîtier (1) des coulisses de guidage (13, 14, 15, 16) pour des éléments de guidage (19) de la plaque (11) sont prévues.
